(19) Europäisches Patentamt
European Patent Office
Office européen des brevets

(11) **EP 4 163 840 A1**

(12) **EUROPEAN PATENT APPLICATION**

(43) Date of publication:
**12.04.2023 Bulletin 2023/15**

(21) Application number: **21201743.8**

(22) Date of filing: **08.10.2021**

(51) International Patent Classification (IPC):
***G06N 10/70*** *(2022.01)*

(52) Cooperative Patent Classification (CPC):
**G06N 10/70**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Algorithmiq Oy**
**00160 Helsinki (FI)**

(72) Inventors:
• **Pérez, Guillermo García**
**20100 Turku (FI)**
• **Rossi, Matteo**
**20100 Turku (FI)**

(74) Representative: **Leinweber & Zimmermann Patentanwalts-PartG mbB European Patent Attorneys Viktualienmarkt 8 80331 München (DE)**

(54) **METHOD FOR ESTIMATING A VALUE OF AN OBSERVABLE QUANTITY OF A QUANTUM SYSTEM AND APPARATUS FOR CARRYING OUT SAID METHOD**

(57) The invention is related to a method for estimating a value of an observable quantity of a quantum system, said observable quantity being associated with a Hermitian operator 0, the method comprising:

Providing measurement means, said measurement means being operative to implement an informationally complete quantum measurement on said quantum system,

Reconstructing M effects $\Pi_m$ constituting an informationally complete Positive Operator Valued Measure corresponding to said informationally complete quantum measurement by using Quantum Detector Tomography applied to said measurement means, the effect $\Pi_m$ being associated with a measurement outcome m,

Implementing said informationally complete quantum measurement on S copies of said quantum system by using said measurement means to thereby obtain a set of measurement data $\left\{m^{(s)}\right\}_{s=1}^{S}$ with $m^{(s)}$ being a measurement outcome for the s-th copy,

Estimating said value of said observable quantity via an

estimator $\bar{O} = \frac{1}{S}\sum_{s=1}^{S} \omega_{m^{(s)}}$, wherein $\omega_m$ are the expansion coefficients of the Hermitian operator O in terms of said effects, i.e., $0 = \Sigma m\ \omega_m\Pi_m$.

**Fig. 1**

**Description**

The present invention is related to a method for estimating a value of an observable quantity of a quantum system and to an apparatus for carrying out said method.

Measuring the value of an observable quantity of a quantum system is of fundamental importance in many technical areas, including e.g., quantum computation and quantum simulation. There, said observable quantity may be linked to the outcome of a quantum computation or quantum simulation. Quantum computers and quantum simulators are however often subject to readout errors. This means that the actual physical measurement process differs from the expected one. Such errors may be caused, e.g., by an interaction of the quantum system with its environment which may introduce noise to the measurement process. Furthermore, the implementation of certain quantum operations associated with said measurement process may not be perfect.

For example, in Noisy Intermediate-Scale Quantum (NISQ) computers, a measurement in the computational basis of a quantum state described by the state vector $|0\rangle$ (or $|1\rangle$) may yield the measurement outcome 1 (or 0) with non-zero probability. Such a measurement error may bias the result of the quantum computation or quantum simulation. For NISQ devices, these readout errors may be orders of magnitude larger than the errors of quantum gates and may thus be a limiting factor for achieving high precision quantum computation, as it would be required, e.g., in the field of quantum chemistry.

Known approaches for addressing these error sources aim at correcting the empirical distribution of the measurement outcomes by modelling the measurement error. A recent idea along those lines is proposed in F.B. Maciejewski et. al., "Mitigation of readout noise in near-term quantum devices by classical post-processing based on quantum detector tomography", Quantum 4, 257 (2020). Assuming that the measurement is only affected by classical noise, Quantum Detector Tomography and classical post-processing are used to mitigate the readout noise in NISQ quantum devices.

While error correction of a quantum measurement may allow to determine the value of an observable quantity with higher accuracy, this approach is computationally costly and is only possible for specific read-out error models, such as bit-flip errors or classical noise.

In view of these problems in the prior art it is thus an object of the present invention to present a method for estimating a value of an observable quantity of a state of a quantum system with high accuracy and to present an apparatus for carrying out said method.

According to a first aspect of the present invention there is provided a method for estimating a value of an observable quantity of a quantum system, said observable quantity being associated with a Hermitian operator 0, the method comprising:

Providing measurement means, said measurement means being operative to implement an informationally complete quantum measurement on said quantum system,

Reconstructing M effects $\Pi_m$ constituting an informationally complete Positive Operator Valued Measure corresponding to said informationally complete quantum measurement by using Quantum Detector Tomography applied to said measurement means, the effect $\Pi_m$ being associated with a measurement outcome m,

Implementing said informationally complete quantum measurement on S copies of said quantum system by using said measurement means to thereby obtain a set of measurement data $\left\{m^{(s)}\right\}_{s=1}^{S}$ with $m^{(s)}$ being a measurement outcome for the s-th copy,

Estimating said value of said observable quantity via an estimator $\bar{O} = \frac{1}{S}\sum_{s=1}^{S}\omega_{m^{(s)}}$, wherein $\omega_m$ are the expansion coefficients of the Hermitian operator O in terms of said effects, i.e., $0 = \sum_m \omega_m \Pi_m$.

The method according to the first aspect of the present invention is directed towards estimating a value of an observable quantity of a quantum system. Said quantum system may be in a pure state i.e., its state may be representable by a density operator $\rho = |\psi\rangle\langle\psi|$, or it may be in a mixed state, i.e., its state may be representable by a density operator $\rho = \sum_i p_i |\psi_i\rangle\langle\psi_i|$ wherein $|\psi\rangle$, resp. $|\psi_i\rangle$ is a state vector and $p_i \geq 0$, $\sum_i p_i = 1$.

The method is adapted for estimating a value of an observable quantity of the quantum system. The observable quantity is not limited as long as it may be associated with the measurement of a Hermitian operator O. For example, the observable quantity may be the energy of the quantum system. In this case, the associated Hermitian operator is the Hamiltonian of the system. The value of an observable quantity of a quantum system described by a density operator $\rho$ is given by the expectation value $(0) = Tr[\rho O]$, where $O$ is the Hermitian operator associated with the observable quantity and $Tr[...]$ is the trace.

The method according to the first aspect of the present invention comprises providing measurement means, said measurement means being operative to implement an informationally complete quantum measurement on said quantum system. An informationally complete quantum measurement allows to estimate the expectation value of any arbitrary operator by averaging functions of the experimental outcomes (see e.g. G.M. d'Ariano et. al., "Informationally complete measurements and group representations" J. Opt. B: Quantum and Semicl. Optics, vol. 6, S487 (2004)). It is not necessary to have any additional knowledge of the measurement means apart from the fact that it is operative to implement an informationally complete quantum measurement on said quantum system. In general, however, a user may have some knowledge about the expected quantum measurement.

An informationally complete quantum measurement is describable by an informationally complete Positive Operator Valued Measure (POVM). A POVM is constituted by M effects $\Pi_m$. An effect is a positive operator acting on the Hilbert space such that the probability to obtain the measurement outcome m is given by $p_m = \text{tr}[\rho\Pi_m]$. The index m is a label. There may be a discrete number of effects. Alternatively, m may correspond to a continuous variable. The effects of the POVM add up to the identity. Any POVM may be realized by a unitary operation acting on the quantum system and an ancillary system followed by a projective measurement on the joint Hilbert space of said quantum system and ancillary system (This is known as Naimark's dilation theorem). I.e., the measurement process involves the application of a unitary operation and a projective measurement. In practice, both the unitary operation and the projective measurement may be noisy.

If the user has some knowledge about the measurement process implemented by the measurement means an ideal/expected POVM with ideal/expected effects $\Pi_{ideal,m}$ describing the ideal/expected quantum measurement of said measurement means may be known. For example, it may be expected that the measurement means is operative to implement a projective measurement on a qubit. Generally, however, the physical implementation of said quantum measurement does not correspond to said ideal POVM. This may be, e.g., due to the fact that the measurement means interacts not only with the quantum system to be measured but also with the environment. Furthermore, the physical realization of certain quantum operations associated with said measurement, e.g., quantum gates, may not be perfect. Thus, the measurement means does not realize the expected POVM but a physical POVM not know to the user. The lack of knowledge may introduce an error in the estimation of the observable.

Thus, the method according to the first aspect of the present invention further comprises reconstructing M effects $\Pi_m$ constituting an informationally complete Positive Operator Valued Measure corresponding to said informationally complete quantum measurement by using Quantum Detector Tomography applied to said measurement means, the effect $\Pi_m$ being associated with a measurement outcome m. Here, m is a label of the corresponding effect. For example, m = 0, ..., M-1.

Quantum Detector Tomography is described, e.g., in J.S. Lundeen et. al., "Tomography of Quantum Detectors", Nature Physics Letters 5, 27 (2009). The basic principle is to prepare a collection of known trial states and to measure them to infer an empirical outcome probability distribution given by $p_{n,p} = \text{tr}[\Pi_n\rho]$, where $\Pi_n$ is a (physical) effect of the physical POVM with measurement outcome n. The collection of trial states must be tomographically complete, i.e., they must form a basis for the operator space of the effects. Then, one may find the effects which best describe the observed probability distribution. This is often done using a likelihood maximization approach. Further realizations of Quantum Detector Tomography are described, e.g., in A. Luis et. al., "Complete characterization of arbitrary quantum measurement processes", Phys. Rev. Lett. 83, 3573 (1999), J. Fiurásek, "Maximum-likelihood estimation of quantum measurement", Phys. Rev. A 64, 024102 (2001), G. M. D'Ariano, et. al., "Quantum calibration of measurement instrumentation", Phys. Rev. Lett. 93, 250407 (2004) and F. B. Maciejewski, et. al., "Mitigation of readout noise in near-term quantum devices by classical post-processing based on detector tomography", Quantum 4, 257 (2020).

Once the effects are determined it may be verified whether they correspond to an informationally complete POVM. For example, one may verify whether the effects are linearly independent.

The reconstructed effects $\Pi_m$ are then used to estimate the value of said observable quantity. To this end, the method according to the first aspect of the present invention further comprises implementing said informationally complete quantum measurement on S copies of said quantum system by using said measurement means to thereby obtain a set of measurement data $\left\{m^{(s)}\right\}_{s=1}^{S}$ with $m^{(s)}$ being the measurement outcome for the s-th copy. The measurement may be applied simultaneously on the S copies. Alternatively, the measurement may be applied one by one on the S copies. The quantum system may be preparable by quantum state preparation. Alternatively, the quantum system may be naturally realized in a physical system.

Since the Positive Operator Valued Measure constituted by the reconstructed effects is informationally complete, it is always possible to expand the Hermitian operator O in terms of the reconstructed effects determined via Quantum Detector Tomography according to $0 = \sum_m \omega_m \Pi_m$. The value of said observable quantity is then estimated by Monte Carlo sampling in the following way: The expectation value of the observable quantity associated to the Hermitian operator O is given by $(0) = \text{tr}[\rho 0] = \sum_m \omega_m \text{tr}[\rho\Pi_m] = \sum_m \omega_m p_m$, where $p_m$ is the probability to obtain the measurement outcome m. In other words, the expectation value of the operator O is the average of $\omega_m$ over the probability distribution $\{p_m\}_m$. Carrying out the measurement on S copies of the quantum system corresponds to sampling from the probability distribution $\{p_m\}_m$ and results in the measurement outcomes $m^{(1)}, ..., m^{(s)}$ forming the set of measurement data. The mean value $\bar{O} = \frac{1}{S}\sum_{S=1}^{S}\omega_{m^{(s)}}$ converges to the expectation value $\langle O \rangle$ as $\sqrt{\mathrm{Var}(\omega_m)/S}$, where $\mathrm{Var}(\omega_m)$ is the variance of $\omega_m$ over the probability distribution $\{p_m\}_m$. Thus, in case that one uses the ideal effects instead of the physical effects realized by the measurement means one obtains a biased estimator. Such a biased estimator yields an incorrect result for the value of the observable quantity.

Thus, the method according to the first aspect of the present invention further comprises estimating said value of said observable quantity via an estimator $O = \frac{1}{S}\sum_{S=1}^{S}\omega_{m^{(s)}}$. Here $\omega_m$ are the expansion coefficients of the Hermitian operator O in terms of said effects, i.e., $O = \sum_m \omega_m \Pi_m$, and $\omega_m(s)$ denotes the expansion coefficient associated to the measurement outcome $m^{(s)}$ for the s-th copy.

The method according to the first aspect of the present invention avoids possible errors occurring in the physical realization of an informationally complete quantum measurement by combining the idea of Monte Carlo Sampling with Quantum Detector Tomography. The accuracy of the estimation is determined by the accuracy with which the effects may be reconstructed and by the statistical error $\sqrt{\mathrm{Var}(\omega_m)/S}$ which is intrinsic to the probabilistic nature of quantum mechanics. Compared to methods known in the art no error correction is required. This leads to a reduction of the computational costs compared to known methods.

The method of the present invention may be applied to any quantum system. In one embodiment of the present invention, said quantum system may be a quantum many-body system. The quantum many-body system may be composed of bosons, fermions or spins.

Said quantum system may be a system of N ≥ 1 k-level systems, in particular of N qubits. The qubits or k-level systems may be arranged in a register and may be used for quantum computation or quantum simulation. The measurement means may be operative to implement operations on a single k-level system and/or on several k-level systems.

For N k-level systems (in particular, N qubits) any informationally complete POVM acting on a single k-level system (or qubit) is realizable by a unitary operator acting on the single k-level system (or qubit) and on an ancillary system followed by a projective measurement. A special class of informationally complete POVMs known as Projective Measurement Simulable is realizable without any ancillary systems and requires only classical randomness, projective measurements and classical post-processing (see e.g. M. Oszmaniec et. al., "Simulating positive operator-valued measures with projective measurements", Phys. Rev. Lett. 119, 190501 (2017)). Other possibilities to implement informationally complete POVMs exist in the art.

In one embodiment of the method according to the present invention reconstructing said effects of said informationally complete Positive Operator Valued Measure comprises reconstructing for each k-level system $M_j \geq k^2$ effects $\Pi_{m_j}^{(j)}$ constituting a local informationally complete Positive Operator Valued Measure, the effect $\Pi_{m_j}^{(j)}$ being associated with a measurement outcome $m_j$. As the local POVM is informationally complete, at least $k^2$ of the effects are linearly independent. In the case of N k-level systems, the Hermitian operator O may be decomposed according to $O = \sum_{m_1...m_N}\omega_{m_1...m_N}\Pi_{m_1}^{(1)}\otimes ... \otimes \Pi_{m_N}^{(N)}$. This approach is particularly useful when the measurement means is operative to implement only operations on single k-level systems. However, the method is not limited to this. There may also be instances where at least one effect of the reconstructed Positive Operator Valued Measure acts on more than one k-level system or qubit, for example on two, three or more k-level systems or qubits.

In one embodiment of the method according to the first aspect of the present invention said effects may be completely determined by Quantum Detector Tomography. In other examples, it may be beneficial to use some knowledge of the measurement process implemented by the measurement means to model the informationally complete quantum measurement. Thus, in another embodiment of the method according to the first aspect of the present invention reconstructing said effects of said informationally complete Positive Operator Valued Measure may comprise describing said informationally complete quantum measurement by a model comprising a quantum operation representable by a completely positive trace-preserving map and a generalized quantum measurement, and wherein said reconstructing may further comprise determining at least one measurement effect corresponding to said generalized quantum measurement by Quantum Detector Tomography. According to this embodiment the informationally complete quantum measurement implemented by the presumably imperfect measurement means is described by a model with realistic POVM effects.

Generally, this model is derived by characterizing each element in the physical implementation of said measurement.

The most general physical process that takes a quantum state to another quantum state is describable by a quantum operation. Every quantum operation may be represented by a completely positive trace non-increasing map. The quantum operation may act on the quantum system only, or it may act on a joint state of the quantum system and an ancillary system. The model according to the embodiment comprises a quantum operation representable by a completely positive trace-preserving (CPTP) map $\varepsilon(\rho)$ and a generalized quantum measurement. Every time evolution of a quantum system may be described by a CPTP map. Every generalized quantum measurement may be described by a measurement POVM. In general, the measurement POVM is not informationally complete. The generalized quantum measurement may comprise a presumably noisy projective measurement. The measurement effects $\{M_{QDT,m}\}_m$ describing the physical implementation of said measurement POVM may be determined using Quantum Detector Tomography. The CPTP map $\varepsilon(\rho)$ may be chosen such that it models, in combination with the generalized quantum measurement, the physical realization of the informationally complete quantum measurement. Then, an informationally complete POVM with associated model effects $\{\Pi_{model,m}\}_m$ describing said informationally complete quantum measurement may be reconstructed via the relation $\mathrm{tr}[\rho\Pi_{model,m}] = \mathrm{tr}[\varepsilon(\rho)M_{QDT,m}]$, which must hold for all $\rho$. This embodiment may be particularly useful when the measurement means is operative to implement a measurement involving some noisy projective measurement and some additional operations, e.g., quantum gates, which may even involve the interaction with an ancillary system. Examples of such quantum operations will be given below.

For instance, an informationally complete quantum measurement implemented with measurement means generally involves a measurement native to the measurement means. In the case of quantum computers, for instance, the measurement means may be operative to measure the qubits in the computational basis which is the measurement native to the measurement means. However, due to noise and other imperfections, as explained above, the physical realization of this measurement is not describable by the ideal projectors $|0\rangle\langle 0|$ and $|1\rangle\langle 1|$. Instead, the physical realization of the measurement is describable by a two-outcome measurement POVM (which is not informationally complete) with unknown measurement effects $M_{meas,0}$ and $M_{meas,1}$. These measurement effects may be determined by Quantum Detector Tomography, which yields the tomographic effects $M_{QDT,0}$ and $M_{QDT,1}$. The tomographic effects should be a good approximation of the measurement effects. Note that, in this case, Quantum Detector Tomography is used to determine only one part of the implementation of the informationally complete POVM: the final noisy projective measurement.

The CPTP map $\varepsilon(\rho)$ may be determined by theoretical considerations only. In another embodiment of the present invention the CPTP map $\varepsilon(\rho)$ may be determined using Quantum Process Tomography. Quantum Process Tomography may be used to reconstruct the Choi matrix or an equivalent Kraus decomposition of the CPTP map. Then it is possible to classically calculate the action of the quantum operation associated to said CPTP map on an arbitrary quantum state. This embodiment may be useful when the corresponding quantum operation is implemented as a sequence of operations and the individual operations may be determined individually by Quantum Process Tomography.

In one embodiment of the present invention said quantum operation may comprise a unitary operation acting on said quantum system. I.e., the quantum operation may comprise an operation that is an exact unitary operation or that may be approximated sufficiently well by a unitary operation. For example, in NISQ devices there may exist single-qubit operations that may realize a unitary operation on a single qubit with very high accuracy. The unitary operation may act only on the quantum system. Alternatively, it may act on a joint state of the quantum system and an ancillary system.

However, in many cases the actual physical implementation of a unitary operation may result in a non-unitary transformation applied on said quantum system due to noise. The dynamics is then better described by a quantum Master equation in which the dissipative terms account for the effect of the noise. Thus, according to one embodiment of the present invention said quantum operation may comprise a quantum operation describable by a quantum Master equation. The corresponding quantum Master equation may be inferred experimentally, so that one can model the dynamics and hence classically assess what CPTP map $\varepsilon_U$ may be actually implemented when intending to implement the unitary $U$.

In the literature of quantum computing, simpler models for noisy quantum operation/gates are commonly found. For instance, it is customary to assume that the result of executing a pulse on a qubit is the ideal unitary followed by some quantum channel, e.g., a depolarizing channel. Such other noisy gate models may be employed here, too. In fact, the idea explained here only assumes the use of some noisy gate model, so that the realistic impact of executing parametrized gates can be accounted for, but it is agnostic to the particular model.

In another embodiment of the present invention said quantum operation may comprise a quantum operation acting on a joint state of said quantum system and an ancillary system, and determining said completely positive trace-preserving map may comprise Quantum State Tomography of said ancillary system. For instance, applying the informationally complete quantum measurement might be based on the interaction of a computational qubit with an ancillary qubit in some state, such as $|0\rangle$. In real situations, the state of the ancillary qubit may have been perturbed and may hence be different from the expected one. To determine the state of the ancillary qubit, one may use single-qubit Quantum State Tomography (QST) after running all other operations necessary for the computation, since these may be responsible for the perturbation. Doing so requires measuring the ancillary qubit in a tomographically complete basis. In this way, the state of a given ancillary qubit may be assumed to be $\rho_{QST}$ instead of the idealized state, and this may be incorporated in the model of the informationally complete quantum measurement.

According to the present invention, the value of the observable quantity is estimated using the estimator $\bar{O} = \frac{1}{S}\sum_{s=1}^{S}\omega_{m^{(s)}}$, wherein $\omega_m$ are the expansion coefficients of the Hermitian operator O in terms of the effects, i.e., $O = \sum_m \omega_m \Pi_m$. This mean value approximates the value of the expectation value of the observable quantity with some error. Thus, in one embodiment of the present invention, said method may further comprise calculating a value of a statistical error function associated to said estimator 0. In this way it may be possible to obtain information regarding the accuracy of the estimation.

In one embodiment said statistical error function may be a function of the second moment of the expansion coefficients $\omega_m$ of the Hermitian operator O in terms of the effects $\{\Pi_m\}_m$ over the probability distribution $\{p_m\}_m$ to obtain the measurement outcome m, $p_m = \text{Tr}[\rho\Pi_m]$, and in particular said function may be the variance. Thus, given the Hermitian operator O, the reconstructed effects $\{\Pi_m\}_m$ and the set of measurement data $\left\{m^{(s)}\right\}_{s=1}^{S}$, a value of the statistical error function may be calculated according to $\text{Var}(\omega_m) = \frac{1}{S}\sum_{s=1}^{S}\omega_{m^{(s)}}^2 - \left(\frac{1}{S}\sum_{s=1}^{S}\omega_{m^{(s)}}\right)^2$.

As was explained above, an informationally complete quantum measurement may involve additional operations, which may even rely on the interaction between the quantum system, e.g., a register of qubits, and some additional degrees of freedom, for example an ancillary system, like ancillary qubits. Furthermore, these operations may be controlled and modified, and thus they may allow the implementation of a family of quantum measurements. Thus, according to another embodiment of the present invention said measurement means may be operative to implement a family of informationally complete quantum measurements parametrized by parameters $\vec{x} = (x_1, ..., x_q)$ on said quantum system, and said reconstructing may comprise reconstructing for parameter values $\vec{x0}$ M parameter-dependent effects $\Pi_m(\vec{x0})$ constituting an informationally complete Positive Operator Valued Measure corresponding to the parameter values $\vec{x0}$, the effect $\Pi_m(\vec{x0})$ being associated with a measurement outcome $m_{\vec{x0}}$. The parameters $\vec{x} = (x_1, ..., x_q)$ may, e.g., comprise a pulse duration and/or a pulse intensity of a single qubit operation which may be changed in the experimental setup. Said reconstructing may comprise reconstructing parameter-dependent effects for all possible values of the parameters $\vec{x}$.

In principle, the parameter-dependent effects may be reconstructed by applying Quantum Detector Tomography to the measurement means operated with different values of the parameters. However, this approach might not be very efficient. Thus, in one embodiment said reconstructing may comprise describing said informationally complete quantum measurement by said model wherein the completely positive trace-preserving map $\varepsilon_{\vec{x}}(\rho)$ depends on said parameters and the generalized quantum measurement is parameter-independent, and wherein said reconstructing may further comprise determining the measurement effects $M_{QDT,m}$ corresponding to said generalized quantum measurement by Quantum Detector Tomography to thereby determine M model effects $\Pi_{model,m}(\vec{x})$ associated to said informationally complete quantum measurement via the relation $\text{tr}[\rho\Pi_{model,m}(\vec{x})] = \text{tr}[\varepsilon_{\vec{x}}(\rho)M_{QDT,m}]$ for all $p$. This embodiment is particularly useful when the expected informationally complete quantum measurement comprises a presumably noisy parameter-independent projective measurement, e.g., a projective measurement in the computational basis. According to the present embodiment it is possible to reconstruct parameter-dependent model effects $\Pi_{model,m}(\vec{x})$ by carrying out Quantum Detector Tomography only for the part of the measurement process that is parameter-independent, i.e., the parameter-independent generalized quantum measurement.

A measurement means that is operative to implement one informationally complete quantum measurement on a quantum system allows to estimate the value of any observable quantity of a quantum system. However, the particular informationally complete quantum measurement may be far from optimal. I.e., given an observable quantity to be measured, the statistical error resulting from the measurement with the measurement means may be large. The statistical error of the measurement may be reduced when the measurement means is operative to implement a family of informationally complete quantum measurements associated with parameters $\vec{x}=(x_1, ..., x_q)$ as mentioned above. Then, the method may further comprise an optimization routine with the following steps:

For some first parameter values $\vec{x0}$, implementing the informationally complete quantum measurement associated to said first parameter values $\vec{x0}$ on S copies of said quantum system to thereby obtain a set of measurement data

$$\left\{m_{\overrightarrow{x0}}^{(s)}\right\}_{s=1}^{S},$$

Calculating a first value of the statistical error function associated to the estimator 0 for the first parameter values $\overrightarrow{x0}$ and determining second parameter values $\overrightarrow{y}$ of the parameters $\overrightarrow{x}$ for which a second value of the statistical error function associated to the estimator $\overline{0}$ for the second parameter values $\overrightarrow{y}$ is smaller than the first value,

Replacing the first parameter values $\overrightarrow{x0}$ with the second parameter values $\overrightarrow{y}$, and

Repeating said optimization routine until a convergence rule is fulfilled.

According to this embodiment, an informationally complete quantum measurement which is suited best for the estimation of the value of said observable quantity is determined. The convergence rule may, e.g., comprise a condition that the first and/or the second value of the statistical error function is smaller than a threshold value. The second parameter values $\overrightarrow{y}$ may be determined, e.g., via a gradient optimization.

An example of the embodiment described above may be as follows:

First parameter values $\overrightarrow{x0}$ are chosen. The M effects $\Pi_{m\overrightarrow{x0}}$ constituting the informationally complete quantum measurement corresponding to said parameter values $\overrightarrow{x0}$ are reconstructed using Quantum Detector Tomography. Then, the informationally complete quantum measurement corresponding to said first parameter values $\overrightarrow{x0}$ is implemented on S copies of the quantum system. For example, the state of the quantum system is prepared S times, and the quantum measurement is applied to each of the copies of the quantum system to thereby obtain a set of measurement data

$$\left\{m_{\overrightarrow{x0}}^{(s)}\right\}_{s=1}^{S}. \text{ Here, } m_{\overrightarrow{x0}}^{(s)}$$ is the result of the measurement applied to the s-th copy of the quantum system. Next, a first value of the statistical error function associated to the estimator 0 (e.g., the variance of the expansion coefficients $\omega_m$ of the operator O over the probability distribution $\{p_m\}_m$ to obtain the measurement outcome m, $p_m = \text{Tr}[\rho\Pi_m]$) is calculated. Concrete examples for this calculation will be given below. In addition, the set of measurement data is used to determine second parameter values $\overrightarrow{y}$ for which a second value of said statistical error function associated to the estimator 0 for the second parameter values $\overrightarrow{y}$ is smaller than the first value. This is always possible since the applied quantum measurement is informationally complete. Then, the first parameter values are replaced by the second parameter values and the optimization routine is repeated. I.e., the second parameter values $\overrightarrow{y}$ are now used for the optimization routine described above. This optimization routine is repeated until a convergence rule is fulfilled. For example, the optimization routine is repeated until the first value and/or the second value are below some threshold value.

For the embodiment described above, any error function may be used. In one preferable embodiment, the statistical error function associated to the estimators 0 for the first and second parameter values may be a function of the second moment of the expansion coefficients $\omega_{model,m}$ of the Hermitian operator O in terms of the model effects $\{\Pi_{model,m}\}_m$ over the probability distribution $\{p_m\}_m$ to obtain the measurement outcome m, $p_m = \text{Tr}[\rho\Pi_{model,m}]$, and in particular said function may be the variance.

For example, when the statistical error function is the variance, said first and second values may be calculated as follows:

Given the measurement data $\left\{m_{\overrightarrow{x0}}^{(s)}\right\}_{s=1}^{S}$ the estimator $\overrightarrow{0}(\overrightarrow{x0})$ for the first parameter values $\overrightarrow{x0}$ is

$$\overline{0} = \frac{1}{S}\sum_{s=1}^{S}\omega_{model,m^{(s)}}\left(\overrightarrow{x0}\right)$$ , wherein the expansion coefficients $\omega_{model,m}(\overrightarrow{x0})$ are determined via $0 = \sum_m\omega_{model,m}(\overrightarrow{x0})\Pi_{model,m}(\overrightarrow{x0})$. The probability to obtain outcome m may be approximated by the equation $p_m(\overrightarrow{x0}) = \text{Tr}[\rho\Pi_{model,m}(\overrightarrow{x0})]$. When the statistical error function is the variance of the expansion coefficients over the probability distribution the first value of the statistical error function is given by $\frac{1}{S}\sum_{s=1}^{S}\omega_{model,m^{(s)}}^{2}\left(\overrightarrow{x0}\right) -$

$$\left(\frac{1}{S}\sum_{s=1}^{S}\omega_{model,m^{(s)}}\left(\overrightarrow{x0}\right)\right)^{2}$$ . For the parameter values $\overrightarrow{y}$ no measurement may have been carried out yet, so that the probability distribution $p_m(\overrightarrow{y}) = \text{Tr}[\rho\Pi_{model,m}(\overrightarrow{y})]$ to obtain outcome m may be unknown. However, since the quantum measurement is informationally complete it is possible to reconstruct this probability distribution from $p_m(\overrightarrow{x0})$ by using the relation between the model effects $\Pi_{model,m}(\overrightarrow{y}) = \sum_n d_{m,n}(\overrightarrow{x0},\overrightarrow{y})\Pi_{model,n}(\overrightarrow{x0})$ with coefficients $d_{m,n}(\overrightarrow{x0}, \overrightarrow{y})$. Then, $p_m(\overrightarrow{y})$

= $\sum_n d_{m,n}(\vec{x0},\vec{y})p_n(\vec{x0})$. The second value of the statistical error function is given by

$$\frac{1}{S}\sum_{s=1}^{S}\sum_n d_{n,m^{(s)}}\left(\vec{x0},\vec{y}\right)\omega^2_{model,n}(\vec{y}) - \left(\frac{1}{S}\sum_{s=1}^{S}\omega_{model,m^{(s)}}(\vec{x0})\right)^2$$ wherein the expansion coefficients $\omega_{model,m}(\vec{y})$ are determined via $0 = \sum_m \omega_{model,m}(\vec{y})\Pi_{model,m}(\vec{y})$. This expression may be minimized as a function of the second parameter values $\vec{y}$. The second parameter values $\vec{y}$ for which the second value is minimal are then used as the first parameter values for a next round of the optimization routine.

The embodiment explained above relies on the assumption that the model effects approximate the physical realization of the underlying informationally complete quantum measurement sufficiently well. To improve the accuracy of the estimation, said method may further comprise determining for the informationally complete quantum measurement parametrized by the parameter values $\vec{x0}$ associated tomographic effects $\Pi_{tomo,m}(\vec{x0})$ by using Quantum Detector Tomography, and wherein the statistical error function associated to the estimator $\bar{0}$ for the first parameter values may be a function of the second moment of the expansion coefficients $\omega_{tomo,m}(\vec{x0})$ of the Hermitian operator O in terms of the tomographic effects $\{\Pi_{tomo,m}(\vec{x0})\}_m$ over the probability distribution $\{p_{tomo,m}(\vec{x0})\}_m$ to obtain the measurement outcome m, $p_{tomo,m}(\vec{x0}) = \text{Tr}[\rho\Pi_{tomo,m}(\vec{x0})]$, the statistical error function associated to the estimator 0 for the second parameter values may be a function of the second moment of the expansion coefficients $\omega_{model,m}(\vec{y})$ of the Hermitian operator O in terms of the model effects $\{\Pi_{model,m}(\vec{y})\}_m$ over the probability distribution $\{p_{model,m}(\vec{y})\}_m$ to obtain the measurement outcome m, $p_{model,m}(\vec{y}) = \text{Tr}[\rho\Pi_{model,m}(\vec{y})]$, and in particular said function may be the variance. I.e., after the parameter values $\vec{x0}$ have been chosen, Quantum Detector Tomography is applied to said measurement means to determine tomographic effects $\Pi_{tomo,m}(\vec{x0})$ that describe the action of said measurement means for the parameter values $\vec{x0}$. Generally, these tomographic effects should lead to a better description of the measurement means than the model effects. Then, the probability to obtain outcome m is approximated by the equation $p_m(\vec{x0}) = \text{Tr}[\rho\Pi_{tomo,m}(\vec{x0})]$. Given the measurement data $\left\{m\frac{(s)}{\vec{x0}}\right\}_{s=1}^{S}$ the estimator $\vec{0}(\vec{x0})$ for the first parameter values $\vec{x0}$ is $0 = \frac{1}{S}\sum_{s=1}^{S}\omega_{tomo,m^{(s)}}\left(\vec{x0}\right)$, wherein the expansion coefficients $\omega_{tomo,m}(\vec{x0})$ are determined via $0 = \sum_m \omega_{tomo,m}(\vec{x0})\Pi_{tomo,m}(\vec{x0})$. When the statistical error function is the variance of the expansion coefficients over the probability distribution the first value of the statistical error function is given by $\frac{1}{S}\sum_{s=1}^{S}\omega^2_{tomo,m^{(s)}}\left(\vec{x0}\right) - \left(\frac{1}{S}\sum_{s=1}^{S}\omega_{tomo,m^{(s)}}\left(\vec{x0}\right)\right)^2$. The tomographic effects for the parameter values $\vec{y}$ may not be known. However, assuming that the model effects describe the real action of the measurement means sufficiently well these effects may be used for the calculation of the estimator $\bar{0}(\vec{y}) = \frac{1}{S}\sum_{s=1}^{S}\omega_{model,m^{(s)}}(\vec{y})$, wherein the expansion coefficients $\omega_{model,m}(\vec{y})$ are determined via $0 = \sum_{m=0}^{M-1}\omega_{model,m}(\vec{y})\Pi_{model,m}(\vec{y})$. Then, using the relation $\Pi_{model,m}(\vec{y}) = \sum_n D_{m,n}(\vec{x0},\vec{y})\Pi_{tomo,n}(\vec{x0})$ the probability distribution for the parameter values $\vec{y}$ is given by $p_m(\vec{y}) = \sum_n D_{m,n}(\vec{x0},\vec{y})p_n(\vec{x0})$, and the second value of the statistical error function may be obtained via $\frac{1}{S}\sum_{s=1}^{S}\sum_n D_{n,m^{(s)}}\left(\vec{x0},\vec{y}\right)\omega^2_{model,n}(\vec{y}) - \left(\frac{1}{S}\sum_{s=1}^{S}\omega_{tomo,m^{(s)}}(\vec{x0})\right)^2$. This expression may be minimized as a function of the second parameter values $\vec{y}$. The second parameter values $\vec{y}$ for which the second value is minimal are then used as the first parameter values for a next round of the optimization routine.

According to a second aspect of the present invention there is provided an apparatus for estimating a value of an observable quantity of a quantum system, said observable quantity being associated with a Hermitian operator *0*, the apparatus comprising:

Measurement means, said measurement means being operative to implement an informationally complete quantum measurement on S copies of said quantum system and to output a set of measurement data $\left\{m^{(s)}\right\}_{s=1}^{S}$, with $m^{(s)}$ being the measurement outcome of the measurement applied to the s-th copy of said quantum system,

Tomographic means, said tomographic means being operative to implement Quantum Detector Tomography on said measurement means to reconstruct M effects $\Pi_m$ constituting an informationally complete Positive Operator Valued Measure corresponding to said informationally complete quantum measurement, the effect $\Pi_m$ being associated with a measurement outcome m, and to output said effects,

Data processing means, said data processing means being operative to accept the set of measurement data $\left\{m^{(s)}\right\}_{s=1}^{S}$ from said measurement means and said effects from said tomographic means as an input and to estimate said value of said observable quantity via an estimator $\bar{O} = \frac{1}{S}\sum_{s=1}^{S}\omega_{m^{(s)}}$, wherein $\omega_m$ are the expansion coefficients of the Hermitian operator O in terms of said effects, i.e., $O = \sum_m \omega_m \Pi_m$.

The apparatus according to the second aspect of the present invention is operative to implement the method according to the first aspect of the present invention. Everything that was said above in relation to said method also applies to said apparatus.

In the following description, the invention will be specified in greater detail by way of examples, with reference to the drawings. In the drawings,

Fig. 1    depicts a schematic exemplary embodiment of the apparatus according to the second aspect of the present invention which is adapted to carry out the method according to the first aspect of the present invention,

Fig. 2    depicts a flow diagram of a first embodiment of the method according to the first aspect of the present invention,

Fig. 3a    schematically depicts the ideal/expected realization of an informationally complete quantum measurement on a single qubit by single-qubit dilation,

Fig. 3b    schematically depicts the physical realization of the single-qubit dilation,

Fig. 3c    schematically depicts the modelling of the physical realization of the single-qubit dilation via a CPTP map and a generalized quantum measurement.

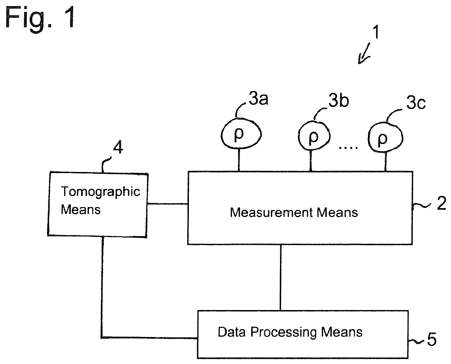

Fig. 1 depicts a schematic exemplary embodiment of the apparatus 1 according to the second aspect of the present invention which is adapted to carry out the method according to the first aspect of the present invention. The apparatus 1 is adapted to estimate a value of an observable quantity of a state of a quantum system, said observable quantity being associated with a Hermitian operator $O$.

The apparatus 1 comprises measurement means 2. Said measurement means is operative to implement an informationally complete quantum measurement on S copies 3a, 3b, 3c of the quantum system, the state of said quantum system 3a, 3b, 3c being describable by a density operator $\rho$.

The measurement means 2 may be operative to implement the informationally complete quantum measurement individually on each of said copies 3a, 3b, 3c. Alternatively, said measurement means 2 may be operative to implement the informationally complete quantum measurement on all S copies simultaneously. As a result of said implementation said measurement means 2 is operative to output measurement data $\left\{m^{(s)}\right\}_{s=1}^{S}$, wherein $m^{(s)}$ is the measurement outcome for the s-th copy.

The apparatus 1 further comprises tomographic means 4, said tomographic means 4 being operative to implement Quantum Detector Tomography on said measurement means 2. Concrete realizations of such tomographic means 4 are known in the art.

The tomographic means 4 is further operative to reconstruct M effects $\Pi_m$ of an informationally complete Positive Operator Valued Measure corresponding to said informationally complete quantum measurement, the effect $\Pi_m$ being associated with a measurement outcome m. Concrete examples for said reconstruction will be given below.

The apparatus 1 also comprises data processing means 5. Said data processing means 5 is operative to accept the set of measurement data $\left\{m^{(s)}\right\}_{s=1}^{S}$ from said measurement means 2 and the reconstructed effects from said tomographic means 4, and to estimate said value of said observable quantity via an estimator $\bar{O} = \frac{1}{S}\sum_{s=1}^{S}\omega_{m^{(s)}}$. Here, $\omega_m$ are the expansion coefficients of the Hermitian operator O in terms of said effects, i.e., $O = \sum_m \omega_m \Pi_m$. The data processing means 5 may comprise output means, e.g., a display, to communicate the value of the estimator to a user.

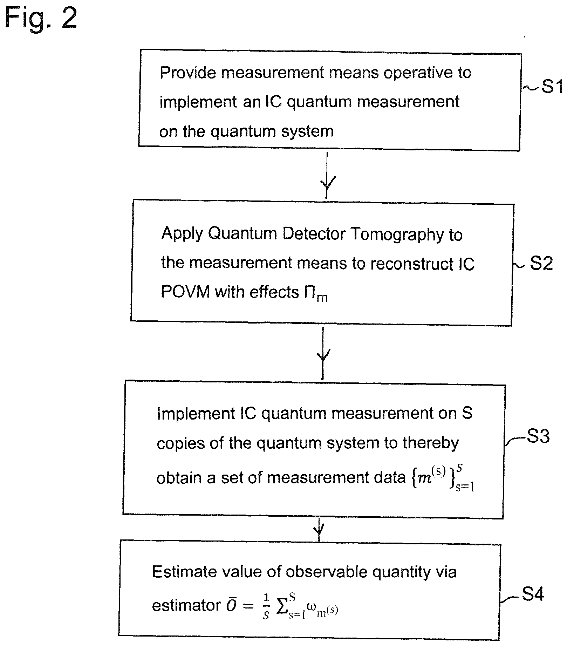

The apparatus according to the second aspect of the present invention is operative to implement the method according to the first aspect of the present invention. Fig. 2 depicts a flow diagram of a first embodiment of the method according to the first aspect of the present invention.

The method comprises at S1 providing measurement means, said measurement means being operative to implement an informationally complete quantum measurement on said quantum system.

Then, at S2, Quantum Detector Tomography is applied to said measurement means to reconstruct an informationally complete Positive Operator Valued Measure corresponding to said informationally complete quantum measurement and having effects $\Pi_m$ with associated measurement outcome m.

Then, at S3, said informationally complete (IC) quantum measurement is implemented on S copies of said quantum system by using said measurement means to thereby obtain a set of measurement data $\text{application}$ with $m^{(s)}$ being the measurement outcome for the s-th copy.

Finally, at S4, said value of said observable quantity is estimated via an estimator $\overline{O} = \frac{1}{S}\sum_{s=1}^{S}\omega_{m^{(s)}}$, wherein $\omega_m$ are the expansion coefficients of the Hermitian operator O in terms of said effects, i.e., $O = \sum_m \omega_m \Pi_m$.

Note that the present invention is not limited to the order of the steps S1 to S4 shown in Fig. 1. For example, step S2 and step S3 may be interchanged.

In the following, examples of the method according to the present invention are presented. The quantum system of the examples is a quantum many-body system comprising N qubits. The state of said quantum many-body system may, e.g., be the state resulting from the application of a quantum computation or a quantum simulation.

For a qubit system, the Hermitian operator O associated to the observable quantity may be expressed in terms of Pauli operators as $O = \sum_{i_1,...,i_N=0}^{3} c_{i_1...i_N} \sigma_{i_1}^{(1)} \otimes ... \otimes \sigma_{i_N}^{(N)}$. Here $\sigma_0^{(i)} = \mathbb{1}$ is the identity, $\sigma_1^{(i)} = \sigma_x^{(i)}$ is the Pauli x-matrix, $\sigma_2^{(i)} = \sigma_y^{(i)}$ is the Pauli y-matrix and $\sigma_3^{(i)} = \sigma_z^{(i)}$ is the Pauli z-matrix acting on the qubit $q_i$.

Example 1:

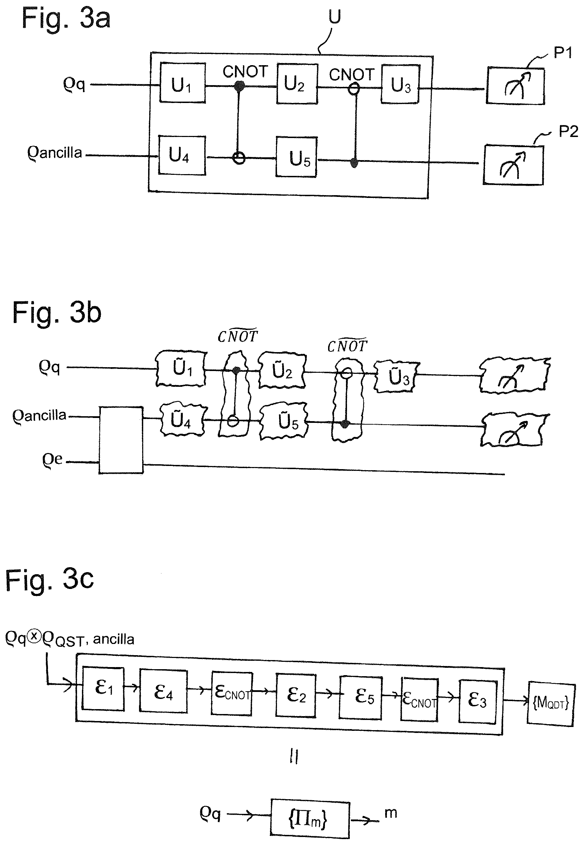

The measurement means according to Example 1 is operative to implement an Informationally complete measurement on a quantum system comprising one computational qubit in the state $\rho_q$ via a single-qubit dilation POVM, as it is shown in Fig. 3a. I.e., an ancillary qubit in the state $\rho_{ancilla}$ is added to the quantum system. A unitary operation U acting on the computational qubit $\rho_q$ and the ancillary qubit $\rho_{ancilla}$ is applied and a projective measurement with projectors P1, P2 applied to the computation qubit, respectively the ancillary qubit, is carried out in the end. The projectors may implement a projective measurement in the computational basis. A model for such a POVM should consider several sources of noise:

On the one hand, at the time of the measurement, the state of the ancillary qubit may have been driven away from the ground state, e.g., due to the interaction with the environment e (see Fig. 3b), and be something else. The state of the ancillary qubit $\rho_{QST,ancilla}$ may be determined by Quantum State Tomography.

A second source of noise is the lack of unitarity throughout the system-ancilla interaction. For example, in NISQ devices, the unitary U may be decomposed in terms of a sequence of single-qubit unitaries $U_j$ and CNOT-gates, as it is shown in Fig. 3a. The single-qubit operations $U_j$ and the CNOT-gates may not be perfectly implemented, as it is indicated in Fig. 3b. One may characterize the physical action of the CNOT gates using Quantum Process Tomography thereby obtaining the corresponding CPTP map $\varepsilon_{QPT,CNOT}$. Furthermore, one may model the single-qubit dynamics by means of an appropriate quantum Master equation or some simple model to obtain a CPTP map $\varepsilon_i$ corresponding to the physical action of the ideal unitary $U_j$. Then, one may decompose the CPTP map corresponding to the unitary U according to $\varepsilon = \varepsilon_3 \circ \varepsilon_{QPT,CNOT} \circ \varepsilon_5 \circ \varepsilon_2 \circ \varepsilon_{QPT,CNOT} \circ \varepsilon_4 \circ \varepsilon_1$, where the sequence of compositions follows that of the physical implementation.

Finally, the projective measurement may be imperfect as well, so Quantum Detector Tomography may be employed to determine the four-outcome $\text{POVM } \{M_{QDT,m}\}_{m=0}^{3}$ corresponding to the physical implementation of the idealized two-qubit computational basis projectors.

The model effects are then determined via the relation $\text{tr}[\rho\Pi_{model,m}(\vec{x})] = \text{tr}[\varepsilon(\rho\otimes\rho_{QST,ancilla})M_{QDT,m}]$ for all $\rho$ (see Fig. 3c).

Then, S copies of the quantum system are prepared and the measurement means is operated to implement the informationally complete measurement on the S copies. Thereby a set of measurement data $\{m^{(s)}\}_{s=1}^{S}$ is obtained, wherein $m^{(s)}$ is the measurement outcome for the s-th copy. Finally, the value of said observable quantity is estimated

via an estimator $\bar{O} = \frac{1}{S} \sum_{s=1}^{S} \omega_{model,m^{(s)}}$ , wherein $\omega_{model,m}$ are the expansion coefficients of the Hermitian operator O in terms of said model effects, i.e., $O = \sum_{m} \omega_{model,m} \Pi_{model,m}$.

Example 2:

The measurement means of example 2 is operative to implement one informationally complete quantum measurement on each of N qubits of a qubit register. The method comprises the following steps:

Step 1: Perform Quantum Detector Tomography of the measurement means to reconstruct the POVM implemented on each of the qubits. The Quantum Detector Tomography may be carried out for all N POVMs in parallel. This generally requires preparing all the qubits in an informationally complete set of states and applying the informationally complete quantum measurement on them repeatedly to gather outcome statistics; these are then used to reconstruct the POVM effects $\Pi_{m_j}^{(j)}$ associated to each qubit $q_j$ on a classical computer.

Step 2: For every qubit $q_j$, determine if the reconstructed effects $\Pi_{m_j}^{(j)}$ form a basis of the Hilbert space of linear operators associated to said qubit. This requires finding a subset of four linearly independent effects. If such subset exists, proceed to the next steps. Otherwise, the implemented measurement is not informationally complete.

Step 3: For every qubit $q_j$ find the decomposition of the Pauli operators $\sigma_{i_j}^{(j)}$ in terms of the effects $\Pi_{m_j}^{(j)}$ determined by Quantum Detector Tomography, $\sigma_{i_j}^{(j)} = \sum_{m_j}^{M} b_{i_j m_j}^{(j)} \Pi_{m_j}^{(j)}$ with coefficients $b_{i_j m_j}^{(j)}$ . This step may be carried out on a classical computer.

Step 4: Prepare S copies of the quantum system and measure the quantum state using the measurement means to thereby obtain a set of measurement data $\left\{ \left( m_1^{(s)} \dots m_N^{(s)} \right) \right\}_{s=1}^{S}$ . Then, calculate $\bar{O} = \frac{1}{S} \sum_{s=1}^{S} \omega_{m_1^{(s)} \dots m_N^{(s)}}$ where $\omega_{m_1 \dots m_N} = \sum_{i_1,\dots,i_N=0}^{3} c_{i_1 \dots i_N} b_{i_1 m_1}^{(1)} \dots b_{i_N m_N}^{(N)}$ , wherein the coefficients $c_{i_1 \dots i_N}$ are the expansion coefficients of the Hermitian operator O in terms of the Pauli matrices, $O = \sum_{i_1,\dots,i_N=0}^{3} c_{i_1 \dots i_N} \sigma_{i_1}^{(1)} \otimes \dots \otimes \sigma_{i_N}^{(N)}$ .

Example 3:

The measurement means of example 3 is operative to implement a family of informationally complete quantum measurements on a quantum system of N qubits. The informationally complete quantum measurement will be modelled by a measurement process involving a quantum operation representable by a parameter-dependent CPTP map and a parameter-independent generalized quantum measurement at the end of the measurement process. Such a measurement process may correspond to the single-qubit dilation shown in Fig. 3a. The method comprises the following steps:

Step 1: For each qubit $q_j$ construct a model of the implemented POVM family associated to the informationally complete quantum measurement applied to said qubit. For each qubit a set of model effects $\Pi_{model,m_j}^{(j)}(\vec{x}_j)$ is constructed, where $\vec{x}_j = (x_1^{(j)}, \dots, x_{n_j}^{(j)})$ is a set of parameters associated with the POVM applied to qubit $q_j$. Note that these model effects may act on the qubit $q_j$ only or that they may act on the qubit $q_j$ and other qubits, including ancilla qubits. The model effects are constructed such that they provide an accurate description of the physical measurement process. Constructing such model comprises the following:

- For each qubit $q_j$, a model of the generalized quantum measurement taking place at the end of the process on all the quantum degrees of freedom involved in the implementation of the informationally complete quantum measurement is constructed. This model is composed of a collection of measurement effects $M_{QDT,m_j}^{(j)}$ reconstructed through Quantum Detector Tomography in a separate set of experiments. Note that these effects only describe the native measurement of the device, not including any other operations in the implementation of the quantum measurement.

- For each qubit $q_j$ a model of the physical transformation, i.e., a CPTP map resulting from the sequence of operations before the final measurement takes place is constructed. The classical description of the CPTP map $\mathcal{E}_{\vec{x}_j}^{(j)}$ may be obtained as a composition of sequential positive trace-preserving maps, some of them parameter-free, and others with parameter dependence. Their classical description may be given in terms of, e.g., their Choi matrix, or through a numerically integrated quantum Master equation. The specific means used for obtaining such descriptions are case-dependent. For example, Quantum Process Tomography or other methods may be used to determine said model. Preferably, measurement errors associated with these methods may be taken into account. For example, read-out noise mitigation techniques may be used. Additionally, or alternatively, Quantum Detector Tomography may be used for a variety of parameter values to make a parameter fit of the model.

Given the measurement effects $M_{QDT,m_j}^{(j)}$ and the completely positive trace-preserving map $\mathcal{E}_{\vec{x}_j}^{(j)}$ the model effects $\Pi_{model,m_j}^{(j)}(\vec{x}_j)$ may be determined by solving the relation $\mathrm{tr}\left[\rho\Pi_{model,m_j}^{(j)}(\vec{x}_j)\right] = \mathrm{tr}\left[\mathcal{E}_{\vec{x}}(\rho)M_{QDT,m_j}^{(j)}\right]$ for all $\rho$.

Step 2: Choose first parameter values $\vec{x0}$ for the set of parameters $\vec{x} = (\vec{x}_1, .., \vec{x}_N)$.

Step 2a (Optional) Determine for the informationally complete quantum measurement parametrized by the parameter values $\vec{x0}$ associated tomographic effects $\Pi_{tomo,m_j}^{(j)}(\vec{x0})$ for each qubit $q_j$ by using Quantum Detector Tomography.

Step 3: Implement the informationally complete quantum measurement associated to said first parameter values $\vec{x0}$ on S copies of said quantum system to thereby obtain a set of measurement data $\left\{m^{(s)}\right\}_{s=1}^{S}$, wherein $m^{(s)} = \left(m_1^{(s)}, ..., m_N^{(s)}\right)$ with $m_j^{(s)}$ being the measurement outcome for the qubit $q_j$ of the s-th copy.

Step 4: Use the set of measurement data $\left\{m^{(s)}\right\}_{s=1}^{S}$ to find parameter values $\vec{y}$ for which the corresponding model effects $\Pi_{model,m_j}^{(j)}(\vec{y})$ are expected to perform better at estimating the observable of interest. This may be done following a similar procedure to the one in "Learning to measure: adaptive informationally complete POVMs for near term-quantum algorithms" by Guillermo Garcia-Perez et al., arxiv:2104.00569v1 Sect. III B, the entire content of which is incorporated by reference. Essentially, one must estimate classically the second moment of the Monte Carlo sampling for quantum measurements with parameters $\vec{y}$ which might not have been applied to the quantum system.

Suppose that we have measured the state by implementing the informationally complete quantum measurement with parameter values $\vec{x0}$ (step 3). Furthermore, suppose that we have determined for the informationally complete quantum measurement parametrized by the parameter values $\vec{x0}$ associated tomographic effects $\Pi_{tomo,m_j}^{(j)}(\vec{x0})$ by using Quantum Detector Tomography in Step 2a. To optimize the informationally complete quantum measurement, we need to estimate the statistical error associated to the estimator $\bar{O}(\vec{y}) = \frac{1}{S}\sum_{s=1}^{S}\omega_{model,m_1^{(s)}...m_N^{(s)}}$ wherein the expansion coefficients $\omega_{model,m_1,...,m_N}$ are given by

$$O = \sum_{m_1,...,m_N}\omega_{model,m_1,...,m_N}(\vec{y})\Pi_{model,m_1}^{(1)}(\vec{y}) \otimes ... \otimes \Pi_{model,m_N}^{(N)}(\vec{y})$$. This may be done by calculating the second moments of $\omega_{model,m_1,...,m_N}(\vec{y})$ given the measurement data obtained with an informationally complete measurement with parameter values $\vec{y}$. However, the measurement for any parameter values $\vec{y}$ may not have been carried out.

Thus, the idea is to decompose the model effects corresponding to the parameter values $\vec{y}$ in terms of the model effects corresponding to the parameter values $\vec{x0}$ and then to minimize the associated statistical error. This can be done efficiently if the effects associated to only one qubit are changed. In general, however, the calculation is possible when the effects associated to more than one qubit are modified, but the classical overhead of the calculation grows exponentially in the number of POVMs that are changed.

For simplicity, let us assume that only the parameter values $\vec{y}_j$ for the qubit $q_j$ are changed, i.e., $\vec{y}_i = \vec{x0}_i$ for all $i \neq j$. Then, the effects with parameter values $\vec{y}_j$ associated to the qubit $q_j$ are expressed in terms of the tomographic effects with parameter values $\vec{x0}_j$ associated to the qubit $q_j$ and which have been determined in step 2a, according to

$$\Pi^{(j)}_{model,m_j}(\vec{y}_j) = \sum_n d^{(j)}_{n,m_j}\left(\vec{x0}_j, \vec{y}_j\right) \Pi^{(j)}_{tomo,m_j}\left(\vec{x0}_j\right)$$ . The coefficients $d^{(j)}_{n,m_j}\left(\vec{x0}_j, \vec{y}_j\right)$ and the measurement data obtained in step 3 may be used to estimate the second value of the statistical error function according to

$$\frac{1}{S}\sum_{s=1}^{S} \sum_n d^{(j)}_{n,m^{(s)}}\left(\vec{x0}_j, \vec{y}_j\right) \omega^2_{model,m_1^{(s)},\dots,m_{j-1}^{(s)},n,m_{j+1}^{(s)}\dots m_N^{(s)}}(\vec{y}_j) - \left(\frac{1}{S}\sum_{s=1}^{S} \omega_{tomo,m^{(s)}}\left(\vec{x0}\right)\right)^2$$ . Here, the co-

efficients $\omega_{model,m}(s)(\vec{y}_j)$ are determined via $O = \sum_m \omega_{model,m^{(s)}}(\vec{y}_j)\Pi^{(j)}_{model,m}(\vec{y}_j)$ .

The statistical error function may be minimized for $\vec{y}_j$ on a classical computer to thereby obtain $\vec{y}_{j,min}$ for which the second value of the statistical error function is minimal. The minimization may be carried out using a gradient descent or any other method. The optimization may be carried out for all qubits to obtain $\vec{y}_{i,min}$ for all qubits. These second parameter values may be used as the parameter values for the informationally complete measurement realized in the next iteration. Then, one returns to step 2 unless a convergence rule has been fulfilled.

As it is discussed in "Learning to measure: adaptive informationally complete POVMs for near term-quantum algorithms" by Guillermo García-Pérez et al., arxiv:2104.00569v1, at the end of the process, the informationally complete data has been used to evaluate one estimator Ot per iteration t, as well as its variance $V_t$. These estimators can all be put together using the on-the-fly method in Sec. III.C. of this reference.

It is not necessary to apply the detector tomography in step 2a. Alternatively, one may use the model effects $\Pi_{model,m}(\vec{x0})$ instead of $\Pi_{tomo,m}(\vec{x0})$ if they can be considered accurate enough. However, step 2a may be useful since one may expect that the model effects result in a less accurate description of the physical process of the measurement compared to the tomographic effect.


**Claims**

1. Method for estimating a value of an observable quantity of a quantum system, said observable quantity being associated with a Hermitian operator $0$, the method comprising:

   Providing measurement means, said measurement means being operative to implement an informationally complete quantum measurement on said quantum system,
   Reconstructing M effects $\Pi_m$ constituting an informationally complete Positive Operator Valued Measure corresponding to said informationally complete quantum measurement by using Quantum Detector Tomography applied to said measurement means, the effect $\Pi_m$ being associated with a measurement outcome m,
   Implementing said informationally complete quantum measurement on S copies of said quantum system by using said measurement means to thereby obtain a set of measurement data $\left\{m^{(s)}\right\}_{s=1}^{S}$ with $m^{(s)}$ being a measurement outcome for the s-th copy,

   Estimating said value of said observable quantity via an estimator $\bar{O} = \frac{1}{S}\sum_{s=1}^{S} \omega_{m^{(s)}}$ , wherein $\omega_m$ are the expansion coefficients of the Hermitian operator O in terms of said effects, i.e., $0 = \sum_m \omega_m \Pi_m$.

2. Method according to claim 1, wherein said quantum system is a quantum many-body system.

3. Method according to claim 1 or 2, wherein said quantum system is a system of N ≥ 1 k-level systems, in particular of N qubits.

4. Method according to claim 3, wherein reconstructing said effects of said informationally complete Positive Operator Valued Measure comprises reconstructing for each k-level system $M_j \geq k^2$ effects $\Pi_{m_j}^{(j)}$ constituting a local informationally complete Positive Operator Valued Measure, the effect $\Pi_{m_j}^{(j)}$ being associated with a measurement outcome $m_j$.

5. Method according to anyone of the preceding claims, wherein reconstructing said effects of said informationally complete Positive Operator Valued Measure comprises describing said informationally complete quantum measurement by a model comprising a quantum operation representable by a completely positive trace-preserving map and a generalized quantum measurement, and wherein said reconstructing further comprises determining at least one measurement effect corresponding to said generalized quantum measurement by Quantum Detector Tomography.

6. Method according to claim 5, wherein said completely positive trace-preserving map is determined using Quantum Process Tomography.

7. Method according to claim 5 or 6, wherein said quantum operation comprises a unitary operation acting on said quantum system.

8. Method according to anyone of claims 5 to 7, wherein said quantum operation comprises a quantum operation describable by a quantum Master equation.

9. Method according to anyone of claims 5 to 8, wherein said quantum operation comprises a quantum operation acting on a joint state of said quantum system and an ancillary system, and wherein determining said completely positive trace-preserving map comprises Quantum State Tomography of said ancillary system.

10. Method according to anyone of the preceding claims, said method further comprising calculating a value of a statistical error function associated to said estimator $\bar{O}$.

11. Method according to claim 10, wherein said statistical error function is a function of the second moment of the expansion coefficients $\omega_m$ of the Hermitian operator O in terms of the effects $\{\Pi_m\}_m$ over the probability distribution $\{p_m\}_m$ to obtain the measurement outcome m, $p_m = \text{Tr}[\rho\Pi_m]$, and in particular said function is the variance.

12. Method according to anyone of the preceding claims, wherein said measurement means is operative to implement a family of informationally complete quantum measurements parametrized by parameters $\vec{x} = (x_1, ..., x_q)$ on said quantum system, and said reconstructing comprises reconstructing for parameter values $\vec{x0}$ M parameter-dependent effects $\Pi_m(\vec{x0})$ constituting an informationally complete Positive Operator Valued Measure corresponding to the parameter values $\vec{x0}$, the effect $\Pi_m(\vec{x0})$ being associated with a measurement outcome $m_{\vec{x0}}$.

13. Method according to claim 12, wherein said reconstructing comprises describing said informationally complete quantum measurement by said model wherein the completely positive trace-preserving map $\varepsilon_{\vec{x}}(\rho)$ depends on said parameters and the generalized quantum measurement is parameter-independent, and wherein said reconstructing further comprises determining the measurement effects $M_{QDT,m}$ corresponding to said generalized quantum measurement by Quantum Detector Tomography to thereby determine M model effects $\Pi_{model,m}(\vec{x})$ associated to said informationally complete quantum measurement via the relation $\text{tr}[\rho\Pi_{model,m}(\vec{x})] = \text{tr}[\varepsilon_{\vec{x}}(\rho)M_{QDT,m}]$ for all $\rho$.

14. Method according to claim 12 or 13, wherein said method further comprises an optimization routine with the following steps:

For some first parameter values $\vec{x0}$, implementing the informationally complete quantum measurement associated to said first parameter values $\vec{x0}$ on S copies of said quantum system to thereby obtain a set of measurement data $\left\{m_{\vec{x0}}^{(s)}\right\}_{s=1}^{S}$,

Calculating a first value of the statistical error function associated to the estimator 0 for the first parameter values $\vec{x0}$ and determining second parameter values $\vec{y}$ of the parameters $\vec{x}$ for which a second value of the statistical error function associated to the estimator 0 for the second parameter values $\vec{y}$ is smaller than the first value,

Replacing the first parameter values $\vec{x0}$ with the second parameter values $\vec{y}$, and

Repeating said optimization routine until a convergence rule is fulfilled.

15. Method according to claim 14, wherein the statistical error function associated to the estimators 0 for the first and second parameter values is a function of the second moment of the expansion coefficients $\omega_{model,m}$ of the Hermitian operator O in terms of the model effects $\{\Pi_{model,m}\}_m$ over the probability distribution $\{p_m\}_m$ to obtain the measurement outcome m, $p_m = \mathrm{Tr}[\rho\Pi_{model,m}]$, and in particular said function is the variance.

16. Method according to claim 14, wherein said method further comprises determining for the informationally complete quantum measurement parametrized by the parameter values $\vec{x0}$ associated tomographic effects $\Pi_{tomo,m}(\vec{x0})$ by using Quantum Detector Tomography, wherein the statistical error function associated to the estimator 0 for the first parameter values is a function of the second moment of the expansion coefficients $\omega_{tomo,m}(\vec{x0})$ of the Hermitian operator O in terms of the tomographic effects $\{\Pi_{tomo,m}(\vec{x0})\}_m$ over the probability distribution $\{p_{tomo,m}(\vec{x0})\}_m$ to obtain the measurement outcome m, $p_{tomo,m}(\vec{x0}) = \mathrm{Tr}[\rho\Pi_{tomo,m}(\vec{x0})]$, the statistical error function associated to the estimator 0 for the second parameter values is a function of the second moment of the expansion coefficients $\omega_{model,m}(\vec{y})$ of the Hermitian operator O in terms of the model effects $\{\Pi_{model,m}(\vec{y})\}_m$ over the probability distribution $\{p_{model,m}(\vec{y})\}_m$ to obtain the measurement outcome m, $p_{model,m}(\vec{y}) = \mathrm{Tr}[\rho\Pi_{model,m}(\vec{y})]$, and in particular said function is the variance.

17. Apparatus (1) for estimating a value of an observable quantity of a quantum system (3a, 3b, 3c), said observable quantity being associated with a Hermitian operator 0, the apparatus comprising:

Measurement means (2), said measurement means (2) being operative to implement an informationally complete quantum measurement on S copies of said quantum system (3a, 3b, 3c) and to output a set of measurement data $\{m^{(s)}\}_{s=1}^{S}$, with $m^{(s)}$ being the measurement outcome of the measurement applied to the s-th copy (3a, 3b, 3c) of said quantum system,

Tomographic means (4), said tomographic means (4) being operative to implement Quantum Detector Tomography on said measurement means (2) to reconstruct M effects $\Pi_m$ constituting an informationally complete Positive Operator Valued Measure corresponding to said informationally complete quantum measurement, the effect $\Pi_m$ being associated with a measurement outcome m, and to output said effects,

Data processing means (5), said data processing means (5) being operative to accept the set of measurement data $\{m^{(s)}\}_{s=1}^{S}$ from said measurement means (2) and said effects from said tomographic means (4) as an input and to estimate said value of said observable quantity via an estimator $\bar{0} = \frac{1}{S}\sum_{s=1}^{S} \omega_{m^{(s)}}$, wherein $\omega_m$ are the expansion coefficients of the Hermitian operator O in terms of said effects, i.e., $0 = \sum_m \omega_m \Pi_m$.

Fig. 1

# Fig. 2

Provide measurement means operative to implement an IC quantum measurement on the quantum system ~S1

Apply Quantum Detector Tomography to the measurement means to reconstruct IC POVM with effects $\Pi_m$ ~S2

Implement IC quantum measurement on S copies of the quantum system to thereby obtain a set of measurement data $\{m^{(s)}\}_{s=1}^{S}$ ~S3

Estimate value of observable quantity via estimator $\bar{O} = \frac{1}{S} \sum_{s=1}^{S} \omega_{m^{(s)}}$ ~S4

# Fig. 3a

# Fig. 3b

# Fig. 3c

# EUROPEAN SEARCH REPORT

Application Number

EP 21 20 1743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AONAN ZHANG ET AL: "Experimental self-characterization of quantum measurements", ARXIV.ORG, CORNELL UNIVERSITY LIBRARY, 201 OLIN LIBRARY CORNELL UNIVERSITY ITHACA, NY 14853, 17 July 2019 (2019-07-17), XP081587567, DOI: 10.1103/PHYSREVLETT.124.040402 * abstract; figures 1-3 * * page 1, column 1, line 1 - page 4, column 2, line 31 * * page 13, line 13 - page 14, line 4 * * page 7, line 1 - page 8, line 5 * ----- | 1-17 | INV. G06N10/70 |
| A | HSIN-YUAN HUANG ET AL: "Predicting Features of Quantum Systems using Classical Shadows", ARXIV.ORG, CORNELL UNIVERSITY LIBRARY, 201 OLIN LIBRARY CORNELL UNIVERSITY ITHACA, NY 14853, 23 August 2019 (2019-08-23), XP081468449, * abstract; figures 1, 5 * * page 1, line 1 - page 3, line 15 * * page 8, line 23 - page 10, line 42 * ----- | 1-17 | |
| A | VLADIMÍR BUZEK ET AL: "Programmable Quantum Processors", QUANTUM INFORMATION PROCESSING, KLUWER ACADEMIC PUBLISHERS-PLENUM PUBLISHERS, NE, vol. 5, no. 5, 12 July 2006 (2006-07-12), pages 313-420, XP019437362, ISSN: 1573-1332, DOI: 10.1007/S11128-006-0028-Z * abstract * * page 375 - page 376 * ----- -/-- | 1-17 | |

TECHNICAL FIELDS SEARCHED (IPC)

G06N

The present search report has been drawn up for all claims

| Place of search | Date of completion of the search | Examiner |
|---|---|---|
| The Hague | 9 March 2022 | Rousset, Antoine |

EPO FORM 1503 03.82 (P04C01)

page 1 of 2

Europäisches
Patentamt

European
Patent Office

Office européen
des brevets

# EUROPEAN SEARCH REPORT

Application Number

EP 21 20 1743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MOTKA L ET AL: "When quantum state tomography benefits from willful ignorance", ARXIV.ORG, CORNELL UNIVERSITY LIBRARY, 201 OLIN LIBRARY CORNELL UNIVERSITY ITHACA, NY 14853, 22 June 2021 (2021-06-22), XP081993583, * abstract * * page 1, line 1 – page 3, line 21 * | 1–17 | |
| A | WANG YUANLONG ET AL: "Tomography of binary quantum detectors*", 2019 IEEE 58TH CONFERENCE ON DECISION AND CONTROL (CDC), IEEE, 11 December 2019 (2019-12-11), pages 396-400, XP033736452, DOI: 10.1109/CDC40024.2019.9029759 [retrieved on 2020-03-09] * abstract * * page 396, column 1, line 1 – page 398, column 2, line 9 * | 1–17 | |

TECHNICAL FIELDS
SEARCHED      (IPC)

The present search report has been drawn up for all claims

| Place of search | Date of completion of the search | Examiner |
|---|---|---|
| The Hague | 9 March 2022 | Rousset, Antoine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F.B. MACIEJEWSKI.** Mitigation of readout noise in near-term quantum devices by classical post-processing based on quantum detector tomography. *Quantum,* 2020, vol. 4, 257
- **G.M. D'ARIANO.** Informationally complete measurements and group representations. *J. Opt. B: Quantum and Semicl. Optics,* 2004, vol. 6, S487
- **J.S. LUNDEEN.** Tomography of Quantum Detectors. *Nature Physics Letters,* 2009, vol. 5, 27
- **A. LUIS.** Complete characterization of arbitrary quantum measurement processes. *Phys. Rev. Lett.,* 1999, vol. 83, 3573
- **J. FIURÁSEK.** Maximum-likelihood estimation of quantum measurement. *Phys. Rev. A,* 2001, vol. 64, 024102
- **G. M. D'ARIANO.** Quantum calibration of measurement instrumentation. *Phys. Rev. Lett.,* 2004, vol. 93, 250407

- **F. B. MACIEJEWSKI.** Mitigation of readout noise in near-term quantum devices by classical post-processing based on detector tomography. *Quantum,* 2020, vol. 4, 257
- **M. OSZMANIEC.** Simulating positive operator-valued measures with projective measurements. *Phys. Rev. Lett.,* 2017, vol. 119, 190501
- **GUILLERMO GARCIA-PEREZ et al.** Learning to measure: adaptive informationally complete POVMs for near term-quantum algorithms. *arxiv:2104.00569v1*
- **GUILLERMO GARCÍA-PÉREZ et al.** Learning to measure: adaptive informationally complete POVMs for near term-quantum algorithms. *arxiv:2104.00569v1*